# EUROPEAN PATENT SPECIFICATION

(11) **EP 2 245 903 B1**
(45) Date of publication and mention of the grant of the patent: **29.02.2012**
(21) Application number: 08864524.7
(22) Date of filing: 15.12.2008
(51) Int. Cl.: H04L 29/06, H04W 92/04

(54) **METHOD, APPARATUSES AND PROGRAM FOR HANDLING PROTOCOL TRANSLATION BETWEEN EPS AND GPRS**
VERFAHREN, VORRICHTUNGEN UND PROGRAMM ZUM ABWICKELN DER PROTOKOLLÜBERSETZUNG ZWISCHEN EPS UND GPRS
SOLUTION D'INTERFACE DE COMMUNICATION

(30) Priority: 19.12.2007 US 14819
(43) Date of publication of application: 03.11.2010
(73) Proprietor: Telefonaktiebolaget LM Ericsson (publ), 164 83 Stockholm (SE)
(72) Inventor: KOPPLIN, Dirk, S-442 54 Ytterby (SE); HERRERO VERÓN, Christian, S-226 49 Lund (SE); RÖNNEKE, Hans Bertil, S-434 34 Kungsbacka (SE); RYDNELL, Gunnar, S-421 59 Västra Frölunda (SE); TOTH, Stefan Karl, S-414 59 Göteborg (SE)
(74) Representative: Vejgaard, Christian
(86) International application number: PCT/EP2008/067551
(87) International publication number: WO 2009/080589

(56) References cited:
- WO-A-02/28123
- US-A1- 2001 053 145
- ERICSSON: "QoS for 2G/3G access" 3GPP DRAFT; S2-081103, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 8 February 2008 (2008-02-08), pages 1-10, XP050263526 [retrieved on 2008-02-08]
- ZAUS R: "Technical Specification Group Core Network and Terminals; 3GPP System Architecture Evolution; CT WG1 Aspects (Release 8), 3GPP TR 24.801 V0.4.0" 3RD GENERATION PARTNERSHIP PROJECT, [Online] October 2007 (2007-10), pages 1-50, XP002546737 Retrieved from the Internet: URL:http://www.3gpp.org/ftp/Specs/archive/ 24_series/24.801/24801-040.zip>

## Description

### TECHNICAL FIELD

The present invention relates to a solution for handling communication protocol messages in a mixed protocol standard network.

### BACKGROUND

Implementing new protocol standards for wireless communication in a wireless network comprise new challenges for developers in relation to existing standards and solutions.
This will require certain aspects in order to be able to implement new solutions with a cost efficient manner with respect to operators and network owners. Different types of network nodes and protocols will co-exist for long times and in order to reduce costs for operators and network owners it is of interest to find solutions for handling mixed protocol networks.

This is true for instance for Evolved Packet Services (EPS) being developed for wireless telecommunication solutions such as 3G. EPS is being specified currently by 3GPP. EPS is a new enhanced packet system (also known as SAE/LTE).

Evolved packet services are provided to mobile users in the evolved packet core (EPC). The access technologies available for an UE to get service from the network, voice service operator, specific services (e.g. IMS) or general internet access are 2G/3G or LTE in the 3GPP technologies.

When an UE roams it may change access technology depending on the best available connectivity, and when doing so it is desirable that the Hand Off between technologies is seamless, such that the UE will keep its connection and in particular its IP address. Such as the EPS is designed currently in TS 23.401 and TS 23.060, the architecture allows for the UE to get access and stay connected via a UP GW, i.e. the PDN-GW. When the UE attaches to the 3GPP LTE system it connects to a control node, the MME, which assigns the UE to a PDN-GW for User Plane access. The PDN-GW assigns an IP address to the UE. When the UE roams between LTE access and 2G/3G access it shall remain using the same PDN-GW for the entire lifetime of the connection, and using the same IP address and IP session.

Such as the system is designed today, the Session Management, i.e. bearers and handling of bearers, is different in LTE access and 2G/3G access. In 2G/3G PDP Contexts are used, while in LTE EPS bearers are used. Therefore a mapping function is needed in both the Core NW and in the UE. When the dual mode UE moves between LTE and 2G/3G there is a need to each time map back and forth between PDP Contexts and EPS bearers.

However, there is a problem in this mapping "down" to PDP Cxt in 2G/3G:
- implementation, Non-Access Stratum (NAS) mapping needed in the UE or in the SGSN
- compatibility problems if mapping is not 100% 1-to-1
- legacy NAS (PDP Cxt) provides less functionality than LTE NAS (probably)

Simple and cost efficient means for providing and controlling Quality of Service (QoS) are important for wireless operators. This has been one of the main drivers behind the evolution of the QoS architecture in 3GPP REL-8 evolved packet system (EPS). EPS is designed for leverage of services from different provides and over different access types to mobile terminals. In contrast, when defining the QoS architecture for GRPS the primary goal was not to define an open architecture for service delivery, but provide tools for operators being in control of the infrastructure and end user services.

Today 3GPP has defined two quite different QoS architectures one in EPS and one in GRPS.

With the evolution of 3GPP Rel-7 to the evolved packet system in 3GPP REL-8 a new QoS architecture has been standardized. The work was driven by the need for simplification of QoS in 3GPP networks. The goal was to provide a platform for access agnostic applications in terminals and still provide tools for the operator to have control over services delivery. With the new QoS architecture there is also a new packet core architecture defined. From an operator perspective it seems important to provide means to connect legacy 3GPP networks to networks following the new architecture. Up to now there are no solutions defined. One possible way forward would be to support the old and the new architecture in the products and protocols. From a product perspective this would mean to ensure that the functionality, such as the new protocols and procedures, are supported on top of the old ones. However, it would also mean that legacy functionality is brought into the evolved packet core networks. From the operator perspective it would add complexity to the network. From an OPEX and CAPEX point of view this is not the most efficient way forward.

WO02/23123 discloses a wireless gateway in a wireless network enabling communication between devices that communicate in different communication protocols. The wireless gateway handles physical link differences and physical link translation for connecting different devices with each other on different wireless links.

A more optimized solution would protect RAN and terminal investments, but not necessarily requires legacy functionality in a strict EPS architecture.

### SUMMARY

It is an object of the present invention to provide a device, method, and system that may provide a solution to handle mixed protocol networks, e.g. to correlate EPS and GPRS architectures in a cost effective way without putting new requirements on RAN and terminals and to handle other communication issues in a mixed protocol network.

This is provided in a number of aspects/embodiments of the present invention which will be discussed in detail in the detailed description of this document. A first aspect of the present invention is provided, a communication node handling inter protocol issues in the mixed protocol telecommunications network, comprising:
- a processing unit;
- a memory unit; and
- a communication interface;
wherein the processor unit is arranged to execute instruction sets stored in the memory unit to perform database lookup operations between two different communication protocol standards communicated on the communication interface and further arranged to operate a bearer translation function, i.e. BTF, providing the database lookup between the two different protocol standards. The BTF is arranged to communicate with a database, externally or internally located, with a protocol lookup table providing connectivity between protocol messages in the two different protocol standards.

The node may be one of a Serving GPRS Support Node, i.e. SGSN, base station, or a standalone node.

The mixed protocol network may for instance comprise a combined GPRS and EPS based network. The BTF may be arranged to handle terminal, RANAP, and Base Station System GPRS Protocol issues into Evolved Packet System specific signalling and the BTF may further be arranged to map signalling parameters between the communication protocols and the BTF may further be arranged to hide parameter differences between the communication protocols. For instance the BTF may be arranged to map parameters between Packet Data Protocol context and Evolved Packet System bearer domains.

A second aspect of the present invention is provided, an infrastructure network supporting wireless communication with user equipment, comprising at least one node according to the first aspect.

A third aspect of the present invention is provided, a method in a telecommunications network handling inter protocol issues in a mixed communication protocol network configuration using a bearer translation function, i.e. BTF handling connectivity between different communication protocols and wherein the BTF is arranged to communicate with a database with a protocol lookup table for each protocol in the mixed protocol network, comprising steps of in a node:
receiving a control message in a first protocol standard format;
sending a request to a database to find a suitable conversion message in a second protocol standard format;
receiving a response from the database with a suitable conversion message; converting the control message in the first protocol standard format to the second protocol standard format;
transmitting the converted control message.

Yet another aspect of the present invention is provided, a processor program stored in a processor readable storage medium, comprising instruction sets for operating the steps of the method.

Also, a system is provided handling inter protocol issues in a mixed communication protocol network, comprising:
- a node according to the first aspect;
- a database comprising a lookup table connecting different communication protocols,
wherein the node is arranged to convert control messages in one protocol standard format to another standard format using the database.

With the solution according to the present invention, it is provided advantages of providing:
- Simpler implementation, no NAS mapping needed in the UE or in the SGSN when moving between LTE and 2G/3G.
- Alignment of functionality for 2G/3G and LTE in rel 8
- No compatibility problems, if mapping between PDP cxt and EPS bearer handling is not 100% 1-to-1.
- Common QoS for both 2G/3G and LTE would also result in benefits in terms of reducing complexity in both terminal and network implementations.

Further merits of the present invention are:
- Adds a key mechanism to handle legacy RAN's and terminal in a strict EPC environment
- Hides 3GPP pre-release-8 awareness from the adjacent nodes in EPC
- Allows building EPS only core network and still support legacy GPRS access
- Doesn't require Serving GW awareness of legacy GPRS releases
- Doesn't require PDN GW awareness of legacy GPRS releases

These and other aspects of the invention will be apparent from and elucidated with reference to the embodiments described hereinafter.

### BRIEF DESCRIPTION OF THE DRAWINGS

In the following the invention will be described in a non-limiting way and in more detail with reference to exemplary embodiments illustrated in the enclosed drawings, in which:
Fig. 1 illustrates schematically an embodiment of a network system according to the present invention;
Fig. 2A and B illustrates schematically nodes according to the present invention;
Fig. 3 illustrates schematically in a block diagram a method according to the present invention;
Fig. 4 illustrates schematically a NAS; same SM in 2G/3G and LTE according to the present invention;
Fig. 5 illustrates schematically how SGSN connects PDP context domain to EPS bearer domain according to the present invention;
Fig. 6 illustrates schematically in a sequence diagram call flow for domain translation according to the present invention;
Fig. 7 illustrates schematically in a sequence diagram call flow for secondary PDP context request with bearer translation function enabled according to the present invention.

### DETAILED DESCRIPTION

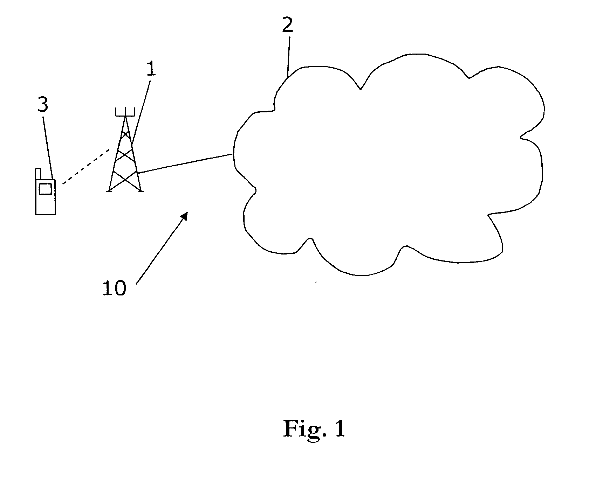

In Fig. 1 reference numeral 10 generally indicate a network according to the present invention, comprising at least one base station 1 or similar wireless access gateway (e.g. access point) to an infrastructure communication network 2. The base station 1 is arranged to communicate with user equipment 3 (UE) wirelessly. The base station 2 also comprises an antenna 20. The core infrastructure communication network 2 comprises several different entities depending on communication protocol used which will be discussed in more detail later in this document.

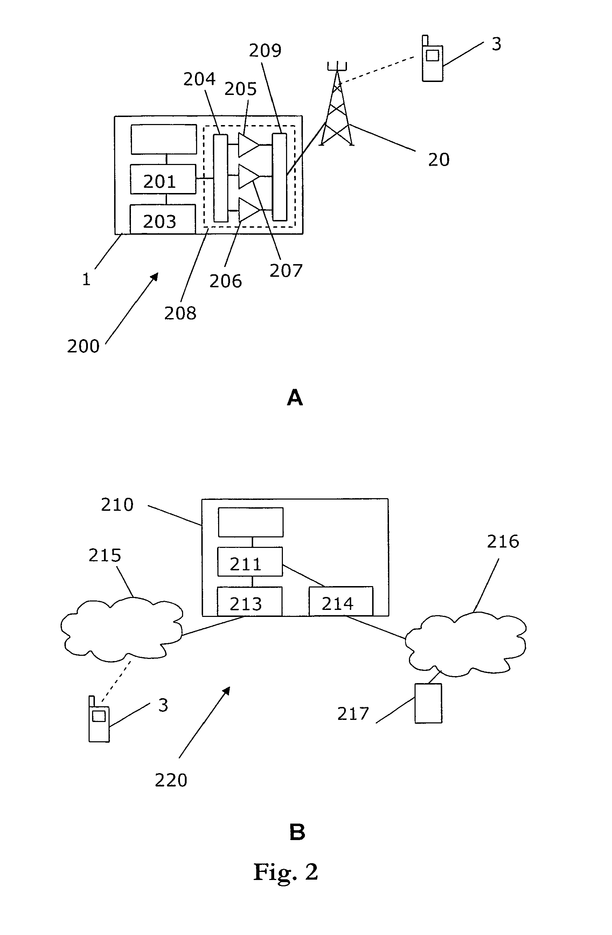

In Fig. 2A a node device 1 (e.g. a base station in a RAN (Radio Access Network) implementing the solution according to the present invention is shown. The device may comprise at least one processing unit 201, at least one memory unit 202, and at least one communication interface 203. Furthermore, the device comprises a transceiver portion 208 for receiving and transmitting radio signals. The transceiver portion may comprise AD/DA unit(s) 204, at least one power amplifier 205, 206, 207, and optionally a switch/multiplexer 209. The processing unit is arranged to run code for communication control and data traffic. It may further be arranged to determine which antennas to use in a MIMO communication configuration. The processing unit 201 may comprise for instance a microprocessor, a Digital Signal Processor (DSP), an ASIC (application Specific Integrated Circuit), or an FPGA (Field programmable gate array) or a combination of these. The memory unit 202 may comprise any suitable type of memory (volatile and/or non-volatile) such as e.g. RAM, ROM, EEPROM, Flash, and hard disk. The communication interface 203 connects the device 1 to the infrastructure network 2. It should be understood by the skilled person that other communication equipment may be present as well depending on the type of wireless communication protocol/standard used. However, the RAN device may comprise any other node part of the RAN where it is suitable to implement the solution according to the present invention, e.g. RNC, BTS, BSC, RBS, or eNodeB.

It should be noted that the transceiver portion 208 may be configured in different ways depending on radio technology and/or communication protocol used as understood by the skilled person.

Fig. 2B shows a second embodiment of a communication network 220 according to the present invention comprising an infrastructure node 210 part of a core infrastructure network implementing the solution according to the present invention. The node 210 may comprise a processing unit 211 controlling communication data (control and/or user plane communication data). The node 210 further comprise at least one memory unit (volatile and/or non-volatile) 212 as understood by the skilled person and at least one communication interface 213, 214. For example, the communication interface may comprise one access interface 213 to an access network 215 (i.e. downstream towards the UE 3) and one infrastructure network interface 214 (i.e. upstream away from the UE) towards an infrastructure network 216 (e.g. the Internet or other communication networks). A server 217 may be attached to the infrastructure network. It should be noted that the access network interface and infrastructure network interface may be using the same physical communication interface (e.g. Ethernet, ATM, or similar communication interface). The infrastructure node may comprise a Serving GPRS Support Node (SGSN), a Gateway GPRS Support Node (GGSN), or a separate entity located in the core network.

The present invention is a solution for handling communication between mixed protocol telecommunication networks. The solution may be implemented in different ways and is applicable on a general basis for 2G/3G networks, e.g. GPRS networks.

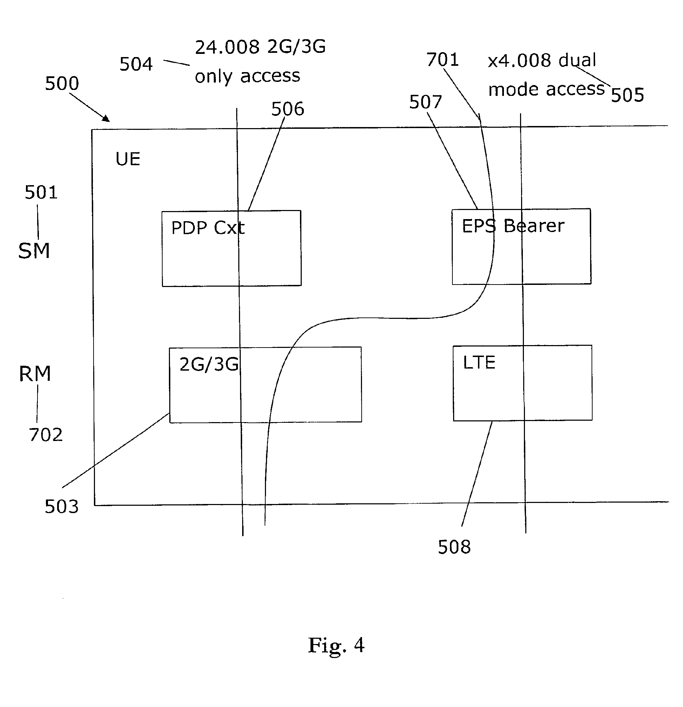

The basic idea of a first method according to the present invention is to construct a new NAS (Non-Access Stratum) protocol over the air between the UE and the core network, such that the same Session management (SM) is usable for both LTE and for 2G/3G access. The NAS protocol invokes the appropriate radio and mobility management (RM and MM) according to 2G/3G or LTE access, but uses the same SM (i.e. bearers and QoS) in release (rel) 8. NAS SM messages will handle EPS bearers always, but include the appropriate RM/MM (radio and mobility management) information such as RAU (Routing Area Update (used for 2G/3G)) and TAU (Tracking Area Update (used for EUTRAN, LTE)) etc. This is illustrated in Fig. 4 where a UE 500 is provided with functionality for handling the mixed protocol situation. The UE is provided with a radio management 702 (RM) functionality for handling both 2G/3G 503 and LTE 508 based radio communication protocols interfaces, each with respective session management 501 interfaces: PDP Context 506 and EPS bearer 507. For communication which is straightforward 2G/3G, TS 24.008 protocol based communication 504 is considered. For communication which is LTE based only, the communication is also straightforward through LTE RM and EPS bearer SM. However, in a mixed protocol route 701, the 2G/3G RM is mixed with the EPS bearer SM.

In summary:
- New NAS (x4.008 505), e.g. in rel 8:
   o May be used in both LTE and in 2G/3G, e.g. in Rel 8
   o includes one SM (EPS Bearers) and two RM/MM (RAU and TAU)
- a rel 7 UE uses 3GPP TS 24.008 and:
   o PDP cxt (context) may be used all the way up to the GGSN rel7 or to the GGSN rel 7 equivalent functionality in the P-GW without involving the S-GW
   o or the SGSN may translate from rel 7 PDP Cxt to rel 8 EPS Bearers and invoke the S-GW.

The 3GPP TS 24.008 specifies the procedures used at the radio interface core network protocols within the 3rd generation mobile telecommunications system and the digital cellular telecommunications system. It specifies the procedures used at the radio interface (Reference Point Um or Uu, see 3GPP TS 24.002 or 3GPP TS 23.002) for Call Control (CC), Mobility Management (MM), and Session Management (SM). These procedures are defined in terms of messages exchanged over the control channels of the radio interface.

The control channels are described in 3GPP TS 44.003 and 3GPP TS 25.301. The structured functions and procedures of this protocol and the relationship with other layers and entities are described in general terms in 3GPP TS 24.007.

The procedures currently described are for the call control of circuit-switched connections, session management for GPRS services, mobility management and radio resource management for circuit-switched and GPRS services.

3GPP TS 24.010 contains functional procedures for support of supplementary services. 3GPP TS 24.011 contains functional procedures for support of point-to-point short message services.
3GPP TS 24.012 contains functional description of short message - cell broadcast. 3GPP TS 44.060 contains procedures for radio link control and medium access control (RLC/MAC) of packet data physical channels.
3GPP TS 44.071 contains functional descriptions and procedures for support of location services.

The procedures defined in the present document apply to the interface structures defined in 3GPP TS 44.003 and 3GPP TS 25.301. They use the functions and services provided by lower layers defined in 3GPP TS 44.005 and 3GPP TS 44.006 or 3GPP TS 25.331 [23c], 3GPP TS 25.322 and 3GPP TS 25.321. 3GPP TS 24.007 gives the general description of layer 3 (A/Gb mode) and Non Access Stratum (lu mode) including procedures, messages format and error handling.

In this embodiment the following configurations are handled as described:
- The dual mode UE that attaches in LTE will invoke EPS Bearers. When the UE moves over to 2G/3G it will keep the EPS bearers.
- The dual mode UE that attaches in 2G/3G may invoke PDP Context as usual in GPRS, but when it moves over to LTE the bearers will be mapped to EPS bearers. When the UE moves over to 2G/3G it will keep the EPS bearers.
- The single mode 2G/3G UE will always use PDP Contexts.
- When moving to rel 7/8 NW mapping to PDP Contexts will be done.

Different states and situations in a bearer state machine for this first solution according to the present invention may be listed as follows:
- Handover (HO) from LTE to 2G/3G: UE keep the EPS bearer.
- HO from LTE to 2G/3G rel 7/8 networks: create a PDP context bearer.
- HO from 2G/3G to LTE: create EPS bearer.
- No bearer to begin with and attaching to a 2G/3G network: create PDP context.
- No bearer to begin with and attaching to an LTE network: Activate bearer (at LTE attach).
- In 2G/3G network and leaving: deactivate PDP context.
- In LTE network and leaving: deactivate default bearer.

A second embodiment of the method according to the present invention provides a solution to connect 3GPP radio networks and terminals to an evolved packet core network. The basis of the present invention is to define a function in a core network node, such as the SGSN, translating GPRS signalling and parameters into EPS signalling and parameters. This mean the SGSN may hide the specifics of GRPS from EPS and vice versa. For this a new function is defined called Bearer Translation Function (BTF). The Bearer Translation Function acts as a gateway: translating terminal, RANAP, and Base Station System GPRS Protocol (BSSGP) signalling into EPS specific signalling. The BTF is preferably placed in the SGSN, thus as close as possible to the RAN, but may also be deployed as a stand alone node somewhere between the SGSN and S-GW. The Bearer Translation Function allows the SGSN to hide differences in EPS Bearer/PDP context signalling from other nodes. This would allow deploying EPS networks without bringing legacy functionality into Serving GW and PDN GW. Serving GW and PDN GW are the edge nodes in the evolved packet core.

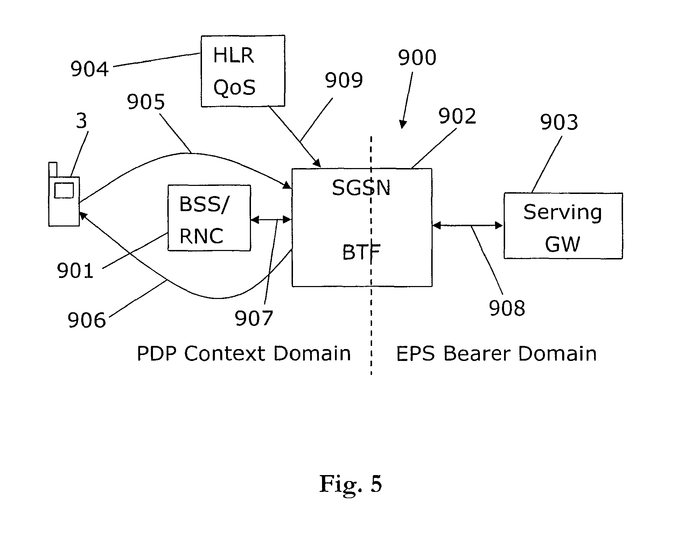

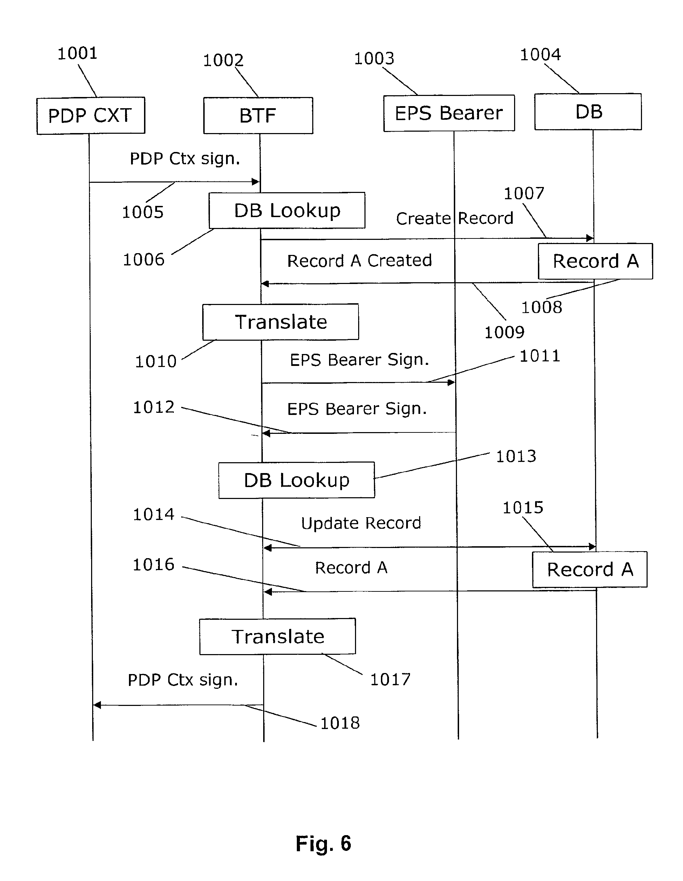

The principles of the function are outlined in Fig. 5 using a system 900 according to the present invention. To describe the method according to the present invention two domains are defined. One is the PDP Context domain 910 and the other one is the EPS bearer domain 911. In Fig. 6 the UE 3 is located in the PDP context domain together with a BSS/RNC 901 in contact with an SGSN 902 via an appropriate interface 907. The SGSN 902 may be exemplified as the border between the two domains when the BTF is located in the SGSN. On the EPS bearer domain is located a Serving GW 903 in communication with the SGSN via an appropriate interface 908. The SGSN is in communication with an HLR 904 providing QoS settings to the SGSN via an appropriate interface 909.

The PDP Context domain is compliant to GPRS, thus PDP Context type of signalling. The EPS bearer domain is compliant to EPS bearer signalling (3GPP Rel-8). The Bearer Translation Function converts parameters and signalling from one domain to the other domain. Specifics in one domain are not visible in the other domain.

All signalling between the PDP Context domain and EPS domain involves the Bearer Translation Function. While some of the QoS parameters used in the different domains have a one to one mapping, others may not have its equivalent in the other domain. The Bearer Translation Function hides all those indifferences from the outside.

Signalling wise there is a one to one mapping between the domains. This means a signalling procedure in one domain has its equivalent in the other domain. As an example a UE initiated Activate secondary PDP context request 905 in the PDP Context domain is translated to a Request Dedicated Bearer Activation Request in EPS bearer domain. The request in this case is responded to by transmitting an Activate (secondary) PDP Context Accept message 906. However, as some of the PDP Context/EPS Bearer parameters do not have its equivalent in the other domain the BTF is responsible for keeping and making parameters available on request. This means each PDP context/EPS bearer has a record with their specific parameters in the SGSN. Parameters not available in the other domain are added from the record during the bearer translation. Others having its equivalent in the other domain are translated. Translation rules may be pre-configured by Operation and Maintenance means (e.g. by external functions). A separate external (or internal) service, e.g. a server 217 (as seen in Fig. 2B) may be used for providing translation rules and/or parameters to a BTF of an operator or network owner. The BSS/RNC in the PDP context domain interchanges PFC/RAB procedures 907 with the SGSN 902. The SGSN /BTF translates between EPS bearer eQoS and Gb, lu, and RIL-3 (Rel-8) PDP Context procedures (defined for EPS procedures on S4, minimized changes to Gb, lu, and UE).

As discussed earlier above in this document: in a suitable node in the network a Bearer Translation Function (BTF) is implemented, which:
- Translates signalling procedures
- Handles Database (DB) interaction
- Maps parameters between PDP context and EPS bearer domain

In a suitable node in the network a database is provided in communication with the BTF, which:
- Keeps data records of PDP context parameter
- Keeps data records of EPS bearer parameters

The BTF may be located at different locations in the network depending on the configuration of the network, such as in the SGSN or in a separate node located close to the SGSN. The BTF may be implemented as a software function.

The database holds a translation table between different protocol standards which may be used as a lookup table for fast and accurate response to translational operations. The database may be located close to the BTF, in a separate node in the network, or even at a location in an external network.

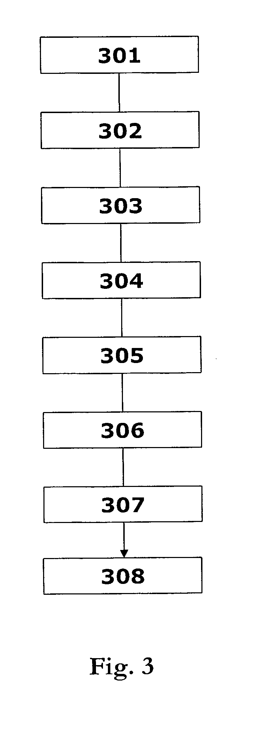

One embodiment for an EPS/PDP mixed network of a BTF method according to the present invention may be shown in relation to Fig. 3 and Fig. 6. The functions involved in this procedure are PDP Context 1001, BTF 1002, EPS Bearer 1003, and translation database 1004. The steps of the method are as follows; however it should be understood that not all are essential steps but this is only an example of handling a PDP context signalling procedure:
301. PDP context signalling 1005 is sent to the BTF 1002. The BTF analyses 1006 the signalling and extract PDP context specific parameters.
302. BTF sends a request 1007 to the DB to create a record 1008 with PDP context related data
303. The DB acknowledge 1009 the creation of the new record.
304. BTF translates 1010 the PDP context parameters into EPS bearer parameters. Parameters, having its equivalent in the corresponding domain, are mapped by the BTF without DB interaction. BTF creates the EPS bearer signalling 1011.
305. BTF receives an EPS bearer signalling 1012 from the EPS Bearer. The BTF analyses 1013 the signalling and extract EPS Bearer specific parameter.
306. BTF sends a request 1014 to the DB to update the record 1015 with EPS bearer relation data and request needed PDP context related data.
307. The DB acknowledges 1016 the update and sends the PDP context related data to the BTF.
308. BTF translates 1017 the EPS bearer parameters into PDP context parameters and finalize the PDP Context signalling 1018. Parameters, having its equivalent in the corresponding domain, are mapped by the BTF without DB interaction.

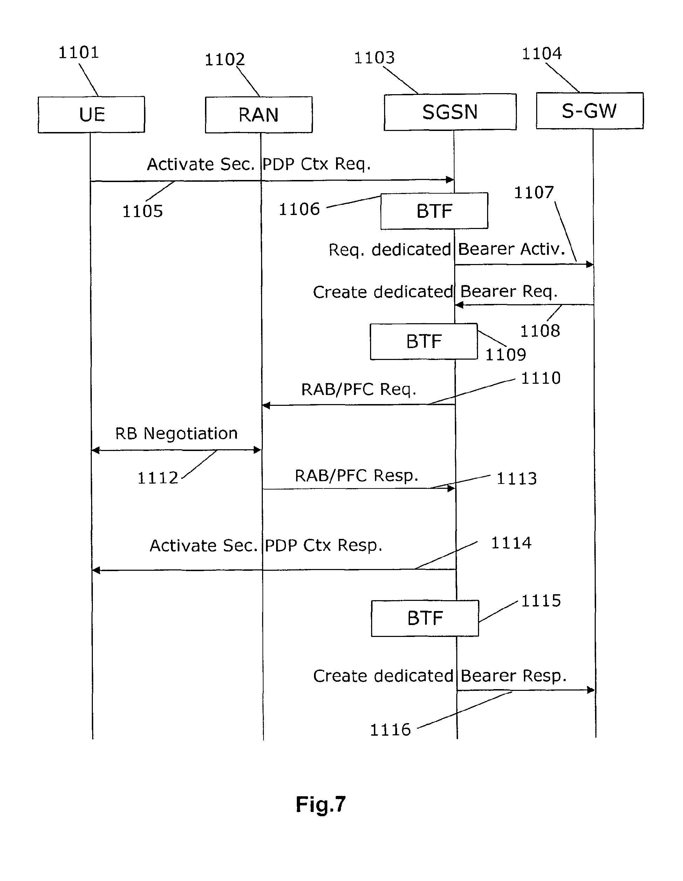

Fig. 7 gives an example of a Secondary PDP Context Request procedure towards an EPS bearer domain as earlier discussed in relation to Fig. 5. The devices of this embodiment are a UE 1101, a RAN 1102, an SGSN 1103, and a Serving GW 1104 (S-GW), The BTF is placed in the SGSN 1103 connecting the PDP Context domain with the EPS Bearer domain. The UE sends an Activate Secondary PDP Context Request 1105 to the SGSN which performs a translation to the EPS domain using the BTF 1106. The SGSN sends a Request for dedicated bearer activation 1107 with parameters such as QCI, GBR, MBR, and TFT to the S-GW which responds with a Create dedicated bearer request 1108 with parameters such as QCI, GBR, MBR, and ARP. The BTF performs translation 1109 back to PDP Context domain and the SGSN sends a RAB/PFC Request 1110 to the RAN 1102 with parameters such as QoS and ARP. The RAN and UE perform a RB negotiation 1112. The RAN thereafter transmits a RAB/PFC Response 1113 with QoS parameters to the SGSN. The SGSN responds with an Activate secondary PDP context response 1114 with parameters such as QoS and TFT. The BTF again performs translation 1115 of control messages in the procedure and the SGSN thereafter transmits a Create dedicated bearer response 1116 to the S-GW.

The proposed method addresses GPRS networks when evolving into an Evolved Packet Core (EPC) network architecture. The key advantage is the smooth migration of GPRS networks into a strict EPC architecture. New EPC nodes such as Serving GW and PDN GW don't need awareness of legacy PDP Context signaling e.g. QoS, call flow procedures, etc. It is also applicable to legacy GPRS network. Legacy awareness is hidden by the Bearer translation function from the adjacent domain. The Bearer Translation Function limits awareness into one single function. If as in the given example the functionality is placed in the SGSN, the SGSN becomes the single point of control between the domains. With the proposed method operators may deploy an EPC only network and still serve legacy terminals and RAN's. The functionality may simply be achieved by a software update of the SGSN.

The methods of the present invention may be implemented as software code instruction sets stored in a computer readable storage medium and possible distributed to the nodes in the network using several different distribution methods, such as using the network for transporting code, using storage media such as CD, DVD, floppy disks, HD, Flash memory, EEPROM, and so on as understood by the skilled person. It should also be appreciated that the instruction sets need not be implemented as software code/instruction sets but can also be implemented as hardware code/instruction sets in a suitable integrated circuit (FPGA, ASIC, and so on).

Also, the UE 3 may have an implementation of the present invention in the form of software instruction sets stored in a computer/processor readable storage medium, such as a memory.

The solution according to the present invention allows for:
- Simpler implementation, no NAS mapping needed in the UE or in the SGSN when moving between LTE and 2G/3G.
- Alignment of functionality for 2G/3G and LTE in rel 8
- No compatibility problems, if mapping between PDP cxt and EPS bearer handling is not 100% 1-to-1.
- Common QoS for both 2G/3G and LTE would also result in benefits in terms of reducing complexity in both terminal and network implementations.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

The above mentioned and described embodiments are only given as examples and should not be limiting to the present invention. Other solutions, uses, objectives, and functions within the scope of the invention as claimed in the below described patent claims should be apparent for the person skilled in the art.

### DEFINITIONS AND ABBREVIATIONS

- BSC: Base Station Controller
- BTF: Bearer Translation Function
- BTS: Base Transceiver Station
- DB: Database
- EPC: Evolved Packet Core
- EPS: Evolved Packet System
- E-UTRAN: Evolved UTRAN
- GGSN: Gateway GPRS Support Node
- GPRS: General Packet Radio Service
- GW: Gateway
- HLR: Home Location Register
- IEEE: Institute of Electrical and Electronics Engineers
- LTE: Long term Evolution
- MME: Mobility Management Entity
- MS: Mobile Station
- NAS: Non-Access Stratum
- PDN: Packet Data Network
- PDP: Packet Data Protocol
- QoS: Quality of service
- RAN: Radio Access Network
- RAU: Radio Area Update
- RNC: Radio Network Controller
- SGSN: Serving GPRS Support Node
- S-GW: Serving GateWay
- TAU: Tracking Area Update
- UE: User Equipment
- UTRAN: UMTS Terrestrial Radio Access Network
- VLR: Visitor Location Register

### REFERENCES

### Incorporated by reference into this document

3GPP TS 23.060 "General Packet Radio Service (GPRS)"
3GPP TS 23.401 "GPRS enhancements for E-UTRAN access"
3GPP TS 23.402 "Architecture Enhancements for non-3GPP accesses"
3GPP TS 24.008 "Mobile radio interface Layer 3 specification"

It should be noted that other protocol standards may be used as understood by the skilled person.

## Claims

1. A core network node (210) for connecting 3GPP radio networks and terminals to an evolved packet core network arranged to handle inter protocol issues in a mixed protocol telecommunications network (220), the node comprising:
- a processing unit (211);
- a memory unit (212); and
- a communication interface (213, 214);
wherein the processor unit is configured to execute instruction sets stored in the memory unit to perform database lookup operations between two different communication protocol standards communicated on the communication interface and the processor further arranged to operate a bearer translation function, BTF, providing the database lookup between the two different communication protocols and the BTF is arranged to communicate with a database with a protocol lookup table providing connectivity between protocol messages in the two different communication protocol standards by mapping parameters between a Packet Data Protocol context domain and an Evolved Packet System bearer domain.

2. The node according to claim 1, wherein the database is located in a node (217) different from the node handling the BTF.

3. The node according to claim 1, wherein the database is maintained by a third party.

4. The node according to claim 3, wherein the BTF is arranged to communicate with the database to the third party using the communication interface.

5. The node according to claim 1, wherein the node is one of a Serving GPRS Support Node, i.e. SGSN, base station, or a standalone node.

6. The node according to claim 1, wherein the mixed protocol network comprises a combined GPRS and EPS based network.

7. The node according to claim 1, wherein the BTF act as a gateway.

8. The node according to claim 1, wherein the BTF is arranged to handle terminal, RANAP, and Base Station System GPRS Protocol issues into Evolved Packet System specific signaling,

9. The node according to claim 1, wherein the BTF is further arranged to map signalling parameters between the communication protocols.

10. The node according to claim 9, wherein the BTF is further arranged to hide parameter differences between the communication protocols.

11. The node according to claim 1, wherein the BTF is arranged to map parameters ! between Packet Data Protocol context and Evolved Packet System bearer domains.

12. An infrastructure network (220) supporting wireless communication with user equipment (3), comprising at least one node (210) according to claim 1.

13. A method handling inter protocol issues for use in a mixed communication protocol network configuration in a telecommunications network (220), using a bearer translation function, BTF, for use in a core network node connecting 3GPP radio networks and terminals to an evolved packet core network, handling connectivity between different communication protocols and wherein the BTF is arranged to communicate with a database with a protocol lookup table for each protocol in the mixed protocol network, comprising steps of in a node (210):
- receiving a control message in a first communication protocol standard format;
- sending a request to a database to find a suitable conversion message in a second communication standard protocol format;
- receiving a response from the database with a suitable conversion message;
- converting the control message in the first communication protocol standard format to the second communication protocol standard format by mapping parameters between a Packet Data Protocol context domain and an Evolved Packet System bearer domain;
- transmitting the converted control message.

14. A processor program stored in a processor readable storage medium, comprising instruction sets for executing the steps of the method according to claim 13.

15. A system handling Inter protocol issues in a mixed communication protocol network, comprising:
- a core network node according to claim 1;
- a database comprising a lookup table connecting different communication protocols,
wherein the node is arranged to convert control messages in one communication protocol format to another communication protocol format by mapping parameters between a Packet Data Protocol context domain and an Evolved Packet System bearer domain using the database.

## Patentansprüche

1. Kernnetzwerk-Knoten (210) zum Verbinden von 3GPP-Funknetzwerken und -Endgeräten mit einem entwickelten Paketkernnetzwerk, dafür eingerichtet, protokollübergreifende Fragen in einem Telekommunikationsnetzwerk mit gemischten Protokollen (220) zu handhaben, wobei der Knoten umfasst:
- eine Verarbeitungseinheit (211);
- eine Speichereinheit (212); und
- eine Kommunikationsschnittstelle (213, 214);
wobei die Verarbeitungseinheit dafür konfiguriert ist, in der Speichereinheit gespeicherte Instruktionssätze auszuführen, um Datenbanksuchoperationen zwischen zwei unterschiedlichen auf der Kommunikationsschnittstelle übermittelten Kommunikationsprotokollstandards durchzuführen, und die Verarbeitungseinheit ferner dafür eingerichtet ist, eine Trägerübersetzungsfunktion, BTF, zu betreiben, welche die Datenbanksuche zwischen den zwei unterschiedlichen Kommunikationsprotokollen bereitstellt, und die BTF dafür eingerichtet ist, mit einer Datenbank mit einer Protokoll-Verweistabelle zu kommunizieren, die Konnektivität zwischen Protokollnachrichten in den zwei unterschiedlichen Kommunikationsprotokollstandards durch Zuordnen von Parametern zwischen einem Paketdatenprotokoll-Kontextbereich und einem Trägerbereich des Entwickelten Paketsystems bereitstellt.

2. Knoten nach Anspruch 1, wobei die Datenbank in einem anderen Knoten (217) als dem Knoten, der die BTF handhabt, angeordnet ist.

3. Knoten nach Anspruch 1, wobei die Datenbank durch eine dritte Seite gepflegt wird.

4. Knoten nach Anspruch 3, wobei die BTF dafür eingerichtet ist, mit der Datenbank zu der dritten Seite unter Verwendung der Kommunikationsschnittstelle zu kommunizieren.

5. Knoten nach Anspruch 1, wobei der Knoten eines der folgenden ist: ein Serving-GPRS-Unterstützungsknoten, d.h. ein SGSN, eine Basisstation oder ein eigenständiger Knoten.

6. Knoten nach Anspruch 1, wobei das Netzwerk mit gemischten Protokollen ein kombiniertes GPRS- und EPS-gestütztes Netzwerk umfasst.

7. Knoten nach Anspruch 1, wobei die BTF als ein Gateway fungiert.

8. Knoten nach Anspruch 1, wobei die BTF dafür eingerichtet ist, Endgerät-, RANAP- und Basisstationssystem-GPRS-Protokollfragen in spezifische Signalisierung des Entwickelten Paketsystems zu übersetzen.

9. Knoten nach Anspruch 1, wobei die BTF ferner dafür eingerichtet ist, Signalisierungsparameter zwischen den Kommunikationsprotokollen zuzuordnen.

10. Knoten nach Anspruch 9, wobei die BTF ferner dafür eingerichtet ist, Parameterdifferenzen zwischen den Kommunikationsprotokollen zu verbergen.

11. Knoten nach Anspruch 1, wobei die BTF dafür eingerichtet ist, Parameter zwischen Paketdatenprotokoll-Kontext- und Entwickelten Paketsystem-Trägerbereichen zuzuordnen.

12. Infrastrukturnetzwerk (220), das drahtlose Kommunikation mit einer Benutzereinrichtung (3) unterstützt, umfassend mindestens einen Knoten (210) nach Anspruch 1.

13. Verfahren zur Handhabung von protokollübergreifenden Fragen zur Verwendung bei einer Netzwerkkonfiguration für gemischte Kommunikationsprotokolle in einem Telekommunikationsnetzwerk (220) unter Verwendung einer Trägerübersetzungsfunktion, BTF, zur Verwendung in einem Kernnetzwerkknoten, der 3GPP-Funknetzwerke und -Endgeräte mit einem entwickelten Paketkernnetzwerk verbindet, welche die Konnektivität zwischen unterschiedlichen Kommunikationsprotokollen handhabt und wobei die BTF dafür eingerichtet ist, mit einer Datenbank mit einer Protokoll-Verweistabelle für jedes Protokoll in dem Netzwerk mit gemischten Protokollen zu kommunizieren, umfassend die in einem Knoten (210) erfolgenden Schritte:
- Empfangen einer Steuerungsnachricht in einem ersten Kommunikationsprotokollstandardformat;
- Senden einer Anforderung an eine Datenbank, um eine geeignete Konvertierungsnachricht in einem zweiten Kommunikationsprotokollstandardformat zu finden;
- Empfangen einer Antwort von der Datenbank mit einer geeigneten Konvertierungsnachricht;
- Konvertieren der Steuerungsnachricht im ersten Kommunikationsprotokollstandardformat in das zweite Kommunikationsprotokollstandardformat durch Zuordnen von Parametern zwischen einem Paketdatenprotokoll-Kontextbereich und einem Trägerbereich des Entwickelten Paketsystems;
- Übertragen der konvertierten Steuerungsnachricht.

14. Prozessorprogramm, das in einem prozessorlesbaren Speichermedium gespeichert ist, umfassend Instruktionssätze zum Ausführen der Schritte des Verfahrens nach Anspruch 13.

15. System, das protokollübergreifende Fragen in einem Netzwerk mit gemischten Kommunikationsprotokollen handhabt, umfassend:
- einen Kernnetzwerkknoten nach Anspruch 1;
- eine Datenbank, die eine Verweistabelle umfasst, die unterschiedliche Kommunikationsprotokolle verbindet,
wobei der Knoten dafür eingerichtet ist, Steuerungsnachrichten in einem Kommunikationsprotokollformat in ein anderes Kommunikationsprotokollformat durch Zuordnen von Parametern zwischen einem Paketdatenprotokoll-Kontextbereich und einem Trägerbereich des Entwickelten Paketsystems unter Verwendung der Datenbank zu konvertieren.

## Revendications

1. Noeud de réseau fédérateur (210) destiné à connecter des terminaux et des réseaux radio 3GPP à un réseau fédérateur par paquets évolué, agencé de manière à traiter des problèmes entre protocoles dans un réseau de télécommunication à protocoles mixtes (220), le noeud comprenant :
- une unité de traitement (211) ;
- une unité de mémoire (212) ; et
- une interface de communication (213, 214) ;
dans lequel l'unité de traitement est configurée de manière à exécuter des ensembles d'instructions stockés dans l'unité de mémoire, en vue de mettre en oeuvre des opérations de consultation de base de données entre deux différentes normes de protocole de communication communiquées sur l'interface de communication, et dans lequel l'unité de traitement est en outre agencée de manière à exploiter une fonction de conversion de porteuse, BTF, fournissant la consultation de base de données entre les deux différentes normes de protocole de communication, et la fonction BTF est agencée de manière à communiquer avec une base de données présentant une table de consultation de protocoles, fournissant une connectivité entre des messages de protocole dans les deux différentes normes de protocole de communication, en mettant en concordance des paramètres entre un domaine de contexte de protocole de données en paquets et un domaine de porteuse de système par paquets évolué.

2. Noeud selon la revendication 1, dans lequel la base de données est localisée dans un noeud (217) distinct du noeud traitant la fonction BTF.

3. Noeud selon la revendication 1, dans lequel la base de données est maintenue par une tierce partie.

4. Noeud selon la revendication 3, dans lequel la fonction BTF est agencée de manière à communiquer avec la base de données vers la tierce partie en utilisant l'interface de communication.

5. Noeud selon la revendication 1, dans lequel le noeud est l'un parmi un noeud de support GPRS de service, SGSN, un noeud de station de base, ou un noeud autonome.

6. Noeud selon la revendication 1, dans lequel le réseau à protocoles mixtes comprend un réseau basé sur une combinaison de systèmes GPRS et EPS.

7. Noeud selon la revendication 1, dans lequel la fonction BTF agit en qualité de passerelle.

8. Noeud selon la revendication 1, dans lequel la fonction BTF est agencée de manière à traiter des problèmes de protocoles RANAP, de protocoles GPRS de système de station de base et de protocoles de terminaux dans la cadre d'une signalisation spécifique au système par paquets évolué.

9. Noeud selon la revendication 1, dans lequel la fonction BTF est en outre agencée de manière à mettre en concordance des paramètres de signalisation entre les protocoles de communication.

10. Noeud selon la revendication 9, dans lequel la fonction BTF est en outre agencée de manière à masquer les différences en termes de paramètres entre les protocoles de communication.

11. Noeud selon la revendication 1, dans lequel la fonction BTF est agencée de manière à mettre en concordance des paramètres entre les domaines de contexte de protocole de données en paquets et de porteuse de système par paquets évolué.

12. Réseau d'infrastructure (220) prenant en charge une communication sans fil avec un équipement utilisateur (3), comprenant au moins un noeud (210) selon la revendication 1.

13. Procédé destiné à traiter des problèmes entre protocoles, à utiliser dans une configuration de réseau à protocoles de communication mixtes au sein d'un réseau de télécommunication (220), en utilisant une fonction de conversion de porteuse, BTF, à utiliser dans un noeud de réseau fédérateur connectant des terminaux et des réseaux radio 3GPP à un réseau fédérateur par paquets évolué, gérant la connectivité entre différents protocoles de communication, et dans lequel la fonction BTF est agencée de manière à communiquer avec une base de données présentant une table de consultation de protocoles, pour chaque protocole dans le réseau à protocoles mixtes, comprenant les étapes ci-après, mises en oeuvre dans un noeud (210), consistant à :
- recevoir un message de commande dans un premier format de norme de protocole de communication ;
- envoyer une demande à une base de données, en vue de trouver un message de conversion approprié dans un second format de norme de protocole de communication ;
- recevoir une réponse en provenance de la base de données, comportant un message de conversion approprié ;
- convertir le message de commande du premier format de norme de protocole de communication au second format de norme de protocole de communication en mettant en concordance des paramètres entre un domaine de contexte de protocole de données en paquets et un domaine de porteuse de système par paquets évolué ;
- transmettre le message de commande converti.

14. Programme de traitement stocké dans un support de stockage lisible par un processeur, comprenant des ensembles d'instructions destinés à exécuter les étapes du procédé selon la revendication 13.

15. Système destiné à traiter des problèmes entre protocoles dans un réseau à protocoles de communication mixtes, comprenant :
- un noeud de réseau fédérateur selon la revendication 1 ;
- une base de données comprenant une table de consultation connectant différents protocoles de communication ;
dans lequel le noeud est agencé de manière à convertir des messages de commande d'un format de protocole de communication à un autre format de protocole de communication en mettant en concordance des paramètres entre un domaine de contexte de protocole de données en paquets et un domaine de porteuse de système par paquets évolué, en utilisant la base de données.
